# FASCICULE DE BREVET EUROPEEN

(11) **EP 0 617 883 B1**
(45) Date de publication et mention de la délivrance du brevet: **17.12.1997**
(21) Numéro de dépôt: 94440021.7
(22) Date de dépôt: 31.03.1994
(51) Int. Cl.: A01D 78/10

(54) **Machine de fenaison, notamment une faneuse**
Heuwerbungsmaschine, insbesondere ein Wender
Haymaking machine, especially a tedder

(30) Priorité: 02.04.1993 FR 9304102
(43) Date de publication de la demande: 05.10.1994
(73) Titulaire: KUHN S.A., F-67700 Saverne (FR)
(72) Inventeur: Aron, Jérôme, F-67330 Dossenheim sur Zinsel (FR)
(74) Mandataire: Andres, Jean-Claude

(56) Documents cités:
- EP-A- 0 505 762
- CH-A- 477 807
- DE-A- 2 002 746
- DE-A- 2 004 349
- DE-A- 4 033 526
- FR-A- 2 146 674

## Description

La présente invention se rapporte à une machine de fenaison, notamment une faneuse de fourrage couché sur le sol, comportant une structure porteuse pouvant être reliée à un tracteur, laquelle structure porte plusieurs rotors qui sont montés de manière à pouvoir tourner sur des axes qui sont dirigés vers le bas et dont certains portent une roue d'appui au sol et les autres portent deux roues d'appui au sol.

Le brevet DE-4 033 526 décrit plusieurs exemples de réalisation dans lesquels les deux rotors qui se situent au milieu comportent une paire de roues d'appui montées sur un balancier. Dans ces exemples, chaque paire se compose soit d'une roue avant qui est pivotante et d'une roue arrière qui est fixe, soit de deux roues qui sont pivotantes.

Dans le cas où les deux roues d'appui de chaque paire sont pivotantes, elles n'assurent aucun guidage de la machine. Celle-ci peut alors se déplacer vers la droite ou vers la gauche par rapport au tracteur et cela notamment dans les terrains en pente. Dans le cas où les roues arrière des deux rotors situés au milieu sont fixes, elles ripent sur le sol dans les virages et lorsqu'il faut tourner en bout de terrain.

La présente invention a pour but de proposer une machine qui ne présente pas ces inconvénients.

A cet effet, dans une machine selon l'invention chaque axe de rotation d'un rotor qui porte deux roues d'appui comporte une première roue d'appui qui est fixe par rapport audit axe de rotation et qui est alignée avec les roues d'appui fixes des axes de rotation des rotors qui n'en portent qu'une seule et une seconde roue d'appui qui est pivotante par rapport audit axe de rotation.

Dans ce cas, les roues fixes guident la machine de sorte qu'elle suit correctement la trajectoire du tracteur. En sus, du fait que toutes les roues fixes de la machine sont alignées, elles tournent autour du même centre instantané de rotation dans les virages et lors des demi-tours. Aucune de ces roues ne ripe alors sur le sol. Il est également possible d'incliner la structure porteuse avec les rotors de manière à travailler le long des bords d'un terrain.

D'autres caractéristiques et avantages de l'invention ressortiront des revendications et de la description ci-après d'un exemple de réalisation non limitatif de l'invention, avec référence aux dessins annexés dans lesquels:
- La figure 1 représente une vue de dessus d'une machine selon l'invention.
- La figure 2 représente, à plus grande échelle, une coupe suivant le plan II-II de la figure 1.

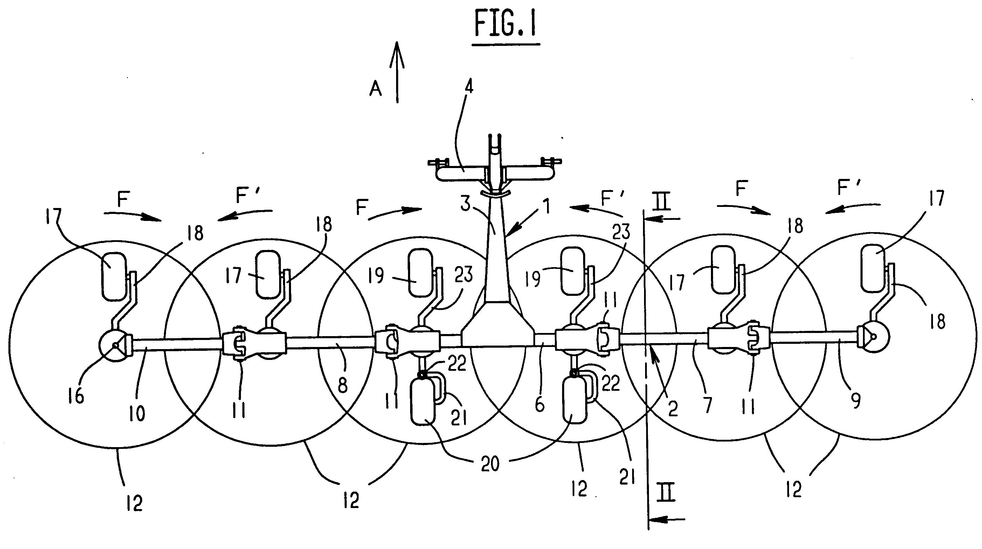

Comme cela ressort de la figure 1, l'invention sera décrite en liaison avec une machine de fenaison destinée à faner du fourrage couché sur le sol. Cette machine comporte une structure porteuse (1) qui se compose d'un bâti transversal (2), d'une poutre (3) et d'un dispositif d'accouplement (4). Ce dernier est articulé à l'extrémité avant de la poutre (3) au moyen d'un axe sensiblement vertical (5). Il comporte trois points d'accouplement pour l'accrochage à un tracteur non représenté. Celui-ci permet de déplacer la machine dans la direction d'avancement indiquée par la flèche (A). L'autre extrémité de la poutre (3) est liée au bâti (2). Celui-ci se compose d'un tronçon central (6) et de quatre tronçons latéraux (7, 8, 9, 10) qui sont articulés entre eux au moyen de pivots (11) dirigés dans la direction d'avancement (A). Le tronçon central (6) porte deux rotors (12). Chaque tronçon latéral porte un rotor (12). La machine représentée possède ainsi au total six rotors (12). On comprendra que ce nombre peut varier suivant que le bâti (2) comporte plus ou moins de tronçons latéraux.

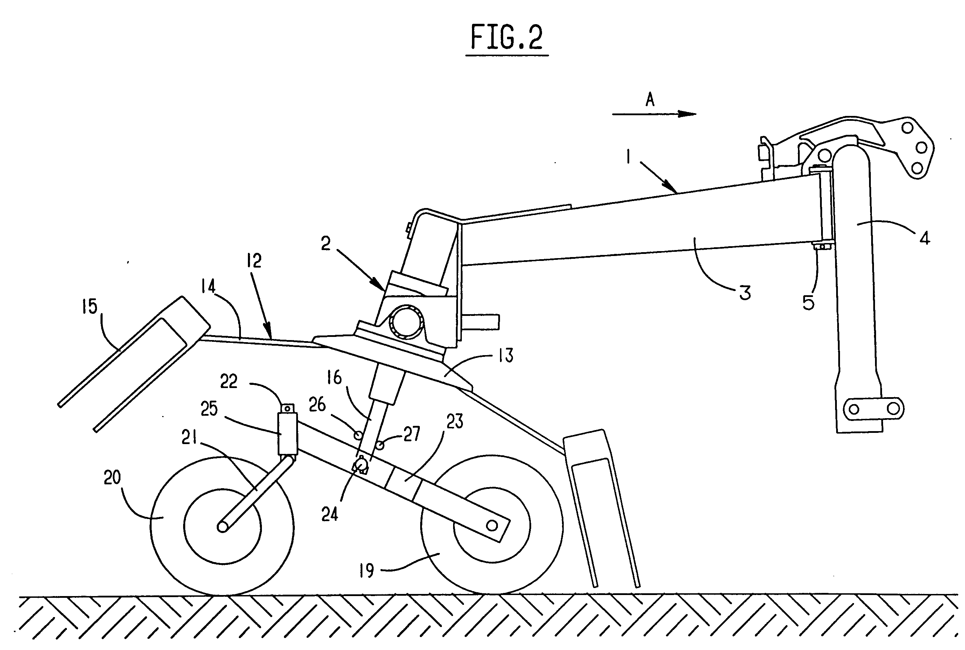

Comme cela ressort notamment de la figure 2, chaque rotor (12) possède un moyeu (13) qui est muni de bras (14). Ceux-ci s'étendent radialement et portent des fourches de travail (15). Ledit moyeu (13) est monté de manière à pouvoir tourner sur un axe de rotation (16) qui est solidaire du bâti (2). En vue de l'entraînement en rotation des rotors (12) chaque moyeu (13) possède une couronne dentée qui engrène avec un pignon solidaire d'un arbre de transmission logé dans le tronçon (6 à 10) correspondant du bâti (2). Les différents arbres sont articulés entre eux et peuvent être reliés à l'arbre de prise de force du tracteur par l'intermédiaire d'un arbre à cardans.

Les axes de rotation (16) des rotors (12) s'étendent vers le bas, en étant légèrement inclinés par rapport à la verticale. Ceux des rotors (12) portés par les tronçons latéraux (7 à 10) du bâti (2) possèdent chacun une roue d'appui (17) pouvant rouler sur le sol. Cette roue d'appui (17) est montée sur une colonne (18) qui est fixée sur l'extrémité inférieure de l'axe de rotation (16) du rotor (12) correspondant. Cette roue (17) est fixe, c'est-à-dire non pivotante durant le travail.

L'axe de rotation (16) de chacun des rotors (12) du tronçon central (6) porte deux roues d'appui (19 et 20). La première roue (19) est fixe, c'est-à-dire non pivotante, et est alignée avec les roues d'appui (17) fixes des rotors (12) des tronçons latéraux (7 à 10). La deuxième roue d'appui (20) est pivotante par rapport audit axe de rotation (16) du rotor (12) correspondant. Elle est montée sur une colonne (21) dont l'extrémité supérieure constitue un axe de pivotement (22) sensiblement vertical. Ces quatre roues d'appui (19 et 20) permettent d'obtenir une meilleure stabilité de la machine ainsi qu'une meilleure répartition du poids du tronçon central (6) qui porte également la poutre (3) et le dispositif d'accouplement (4).

Les roues d'appui (17 et 19) qui sont fixes se situent devant les axes de rotation (16) des rotors (12). Elles peuvent ainsi être rapprochées des fourches de travail (15) situées sur la partie avant de leur trajectoire, de manière à bien leur faire suivre les dénivellations du sol. Les roues d'appui (20) qui sont pivotantes se situent derrière les axes de rotation (16). Elles disposent ainsi de l'espace nécessaire pour pouvoir pivoter autour des axes sensiblement verticaux (22) de leurs colonnes (21). Les deux roues d'appui (19 et 20) de chacun des rotors (12) du tronçon central (6) confèrent plus de stabilité à la machine, aussi bien lorsqu'elle est accouplée à un tracteur que lorsqu'elle est désaccouplée.

La roue d'appui fixe (19) et la roue d'appui pivotante (20) qui sont reliées à un même axe de rotation (16) sont montées sur un balancier (23) (figure 2). Celui-ci est articulé sur ledit axe de rotation (16) au moyen d'un pivot (24) sensiblement horizontal. Ce pivot (24) se situe sensiblement à égale distance des deux roues d'appui (19 et 20). Le balancier (23) comporte à son extrémité arrière un palier (25) dans lequel est logé l'axe de pivotement (22) de la colonne (21) de la roue d'appui pivotante (20). Chaque axe de rotation (16) qui porte un balancier (23) comporte deux butées (26 et 27). Celles-ci limitent l'angle de pivotement dudit balancier (23) autour de son pivot (24).

Selon une variante de réalisation, toutes les roues d'appui (17, 19 et 20) peuvent être tournées d'un angle d'environ 30° vers la droite ou vers la gauche, soit sur les axes de rotation (16), soit avec lesdits axes (16). Dans le premier cas, les colonnes (18) ou les balanciers (23) peuvent être déplacés sur les axes de rotation (16). Dans le deuxième cas, lesdits axes de rotation (16) peuvent être déplacés et immobilisés dans différentes positions par rapport au bâti (2).

Durant le travail, la machine est déplacée dans la direction d'avancement (A) au moyen du tracteur. Dans la position représentée sur la figure 1, le bâti (2) et les rotors (12) se situent sur une ligne qui est sensiblement perpendiculaire au sens d'avancement (A). Toutes les roues d'appui fixes (17 et 19) de l'ensemble des rotors (12) sont alors alignées et se situent également sur une ligne sensiblement perpendiculaire au sens d'avancement (A). Les rotors (12) sont alors entraînés en rotation autour de leurs axes (16) respectifs, de telle sorte qu'ils tournent deux à deux en convergence à l'avant (Flèches F et F'). Lors de cette rotation, leurs fourches (15) ramassent les végétaux qui se trouvent au sol, les déplacent vers l'arrière et les étalent à nouveau tout en provoquant leur retournement. Les roues d'appui fixes (17 et 19) guident les rotors (12), le bâti (2) et la poutre (3) afin qu'ils suivent correctement la trajectoire du tracteur même sur les terrains en pente, dans les virages et lors des demi-tours. Les roues d'appui pivotantes (20) s'orientent automatiquement dans la direction suivie.

Les roues d'appui (17, 19 et 20) permettent également aux rotors (12) de suivre les dénivellations du sol. Les déplacements en hauteur des roues d'appui (19 et 20) qui sont montées sur un balancier (23) ne sont que partiellement transmis aux rotors (12), ce qui permet d'obtenir une meilleure stabilité de toute la machine même lorsque la vitesse d'avancement est élevée. On comprendra que pour améliorer encore davantage la stabilité de la machine, il est possible d'équiper d'autres rotors (12) de deux roues d'appui (19 et 20) montées sur un balancier (23).

Lorsque sur la machine selon la variante de réalisation les roues d'appui (17, 19 et 20) sont tournées vers la droite ou vers la gauche, le bâti (2) avec les rotors (12) tourne avec la poutre (3) d'un angle à peu près similaire autour de l'axe d'articulation (5). Ce déplacement est provoqué par les roues d'appui fixes (17 et 19) qui se replacent dans la direction d'avancement (A). Le bâti (2) avec les rotors (12) et les roues d'appui fixes (17 et 19) se situent alors sur des lignes inclinées par rapport à la direction d'avancement (A). Ces roues d'appui fixes (17 et 19) guident la machine et suivent parfaitement la trajectoire du tracteur. Dans ce cas, les rotors (12) projettent le fourrage en biais et l'éloignent par exemple du bord du terrain.

Pour le transport de la machine, les tronçons latéraux (7 à 10) du bâti (2) peuvent être repliés vers le haut, autour de leurs pivots (11), afin de réduire la largeur de l'ensemble. Ce repliement est avantageusement effectué au moyen de vérins hydrauliques non représentés.

Lorsque la machine est détachée du tracteur, elle peut reposer sur les quatre roues d'appui (19 et 20) des deux rotors (12) du tronçon central (6) et une béquille prévue sur la poutre (3) ou le dispositif d'accouplement (4). Dans cette position, elle est plus stable qu'une machine qui ne possède qu'une seule roue d'appui sous chaque rotor (12) du tronçon central (6).

Il est bien évident que l'invention n'est pas limitée au mode de réalisation décrit et représenté sur les dessins annexés. Des modifications sont possibles, notamment en ce qui concerne la constitution des divers éléments ou par substitution d'équivalents techniques, sans pour autant sortir du domaine de protection tel que défini dans les revendications.

## Revendications

1. Machine de fenaison, notamment une faneuse de fourrage couché sur le sol, comportant une structure porteuse (1) pouvant être reliée à un tracteur, laquelle structure (1) porte plusieurs rotors (12) qui sont montés de manière à pouvoir tourner sur des axes de rotation (16) qui sont dirigés vers le bas et dont certains portent une roue d'appui au sol (17) et les autres portent deux roues d'appui au sol (19 et 20), caractérisée par le fait que chaque axe de rotation (16) qui porte deux roues d'appui (19 et 20) comporte une première roue d'appui (19) qui est fixe par rapport audit axe de rotation (16) et qui est alignée avec les roues d'appui (17) fixes des axes de rotation (16) qui n'en portent qu'une seule et une seconde roue d'appui (20) qui est pivotante par rapport audit axe de rotation (16).

2. Machine selon la revendication 1, caractérisée par le fait que les roues d'appui (17 et 19) qui sont fixes se situent devant les axes de rotation (16) des rotors (12) et que les roues d'appui (20) qui sont pivotantes se situent derrière lesdits axes de rotation (16).

3. Machine selon la revendication 2, caractérisée par le fait que la roue d'appui fixe (19) et la roue d'appui pivotante (20) qui sont reliées à un même axe de rotation (16) sont montées sur un balancier (23) qui est articulé sur ledit axe de rotation (16) au moyen d'un pivot (24) sensiblement horizontal.

## Claims

1. Haymaking machine, especially a tedder for fodder lying on the soil, having a carrying structure (1) which can be connected to a tractor, which structure (1) carries several rotors (12) which are monted so that they can turn about axes of rotation (16) which are directed downwards and some of which bear one support wheel (17) and the others bear two support wheels (19 and 20), ***characterized in that*** each axis of rotation (16) which bears two support wheels (19 and 20) has a first support wheel (19) which is fixed with respect to the said axis of rotation (16) and which is aligned with the fixed support wheels (17) of the axes of rotation (16) which bear only one wheel and a second support wheel (20) which is pivoting with respect to the said axis of rotation (16).

2. Machine according to claim 1, ***characterized in that*** the support wheels (17 and 19) which are fixed are situated in front of the axes of rotation (16) of the rotors (12) and in that the support wheels (20) which are pivoting are situated behind the said axes of rotation (16).

3. Machine according to claim 2, ***characterized in that*** the fixed support wheel (19) and the pivoting support wheel (20) which are connected to a same axis of rotation (16) are mounted on a rocking beam (23) which is articulated on the said axis of rotation (16) by means of a substantially horizontal pivot (24).

## Patentansprüche

1. Heuwerbungsmaschine, insbesondere ein Zetter für auf dem Boden liegende Futterpflanzen, die ein mit einem Traktor verbindbares Traggestell (1) aufweist, wobei das Gestell (1) mehrere Rotoren (12) trägt, die so angebracht sind, daß sie sich auf nach unten ausgerichteten Drehachsen (16) drehen können, von denen einige ein Rad (17) zum Stützen auf den Boden und die anderen zwei Räder (19 und 20) zum Stützen auf den Boden tragen, ***dadurch gekennzeichnet**,* daß jede zwei Stützräder (19 und 20) tragende Drehachse (16) ein erstes Stützrad (19), das bezüglich der Drehachse (16) festgelegt und auf die festgelegten Stützräder (17) der Drehachsen (16), die nur eines tragen, ausgerichtet ist, und ein zweites Stützrad (20), das bezüglich der Drehachse (16) schwenkbar ist, aufweist.

2. Maschine nach Anspruch 1, ***dadurch gekennzeichnet**,* daß sich die festgelegten Stützräder (17 und 19) vor den Drehachsen (16) der Rotoren (12) befinden und daß sich die schwenkbaren Stützräder (20) hinter den Drehachsen (16) befinden.

3. Maschine nach Anspruch 2*, **dadurch gekennzeichnet**,* daß das festgelegte Stützrad (19) und das schwenkbare Stützrad (20), die mit einer gleichen Drehachse (16) verbunden sind, an einem Wipparm (23) angebracht sind, der mittels eines im wesentlichen horizontalen Drehzapfens (24) an der Drehachse (16) angelenkt ist.
